# FASCICULE DE BREVET EUROPEEN

(11) **EP 4 255 793 B1**
(45) Date de publication et mention de la délivrance du brevet: **09.04.2025**
(21) Numéro de dépôt: 21819856.2
(22) Date de dépôt: 29.11.2021
(51) Int. Cl.: B62D 1/10

(54) **PROCEDE ET SYSTEME DE NEUTRALISATION DE REMONTEE DE SECOUSSES SUPPORTEES PAR UNE COLONNE DE DIRECTION DE VEHICULE**
VERFAHREN UND SYSTEM ZUR NEUTRALISIERUNG VON AUFSTEIGENDEN RUCKBEWEGUNGEN MIT UNTERSTÜTZUNG DURCH EINE FAHRZEUGLENKSÄULE
METHOD AND SYSTEM FOR NEUTRALISING RISING JOLTS SUPPORTED BY A VEHICLE STEERING COLUMN

(30) Priorité: 05.12.2020 FR 2012740
(43) Date de publication de la demande: 11.10.2023
(73) Titulaire: CKP ENGINEERING, 40270 Cazères sur Adour (FR)
(72) Inventeur: FERRAZZO, Julien, 40800 Duhort Bachen (FR)
(74) Mandataire: Junca, Eric
(86) Numéro de dépôt international: PCT/EP2021/083332
(87) Numéro de publication internationale: WO 2022/117495

(56) Documents cités:
- DE-A1- 3 309 437

## Description

### DOMAINE TECHNIQUE

L'invention relève de l'aménagement d'une colonne de direction d'un véhicule roulant dont la propulsion est motorisée ou non, tels que par exemple les véhicules automobiles et/ou utilitaires, camions, engins de chantier, les quadricycles, les motocycles, les bicyclettes, les trottinettes ou les gyropodes.

L'invention se rapporte plus spécifiquement à un procédé et à un système de neutralisation d'efforts générés par des secousses transitoires transmises à une colonne de direction d'un véhicule roulant. De tels efforts sont consécutifs à un choc qui est supporté brièvement par au moins une roue directrice du véhicule, et qui est générateur de remontée d'au moins une secousse transitoire qu'il convient de ne pas transmettre au conducteur d'un desdits véhicules via la colonne de direction.

### ETAT DE LA TECHNIQUE

Les véhicules roulants sont communément équipés d'une colonne de direction via laquelle un conducteur dirige le véhicule. Ladite colonne est agencée sous la forme d'un arbre tournant pouvant comporter plusieurs tronçons successivement accouplés entre eux via une pluralité d'élément de couplages mobiles intercalés entre les tronçons comme décrit dans le document de brevet DE 33 09 437 A1. La colonne est manœuvrable en rotation par un organe de commande de changements de trajectoire du véhicule - tel qu'un volant ou un guidon - qui est actionnable par le conducteur du véhicule.

L'organe de commande est monté sur la colonne à son extrémité axialement proximale, via un support de réception - dit support de volant - ménagé dans une portion terminale de colonne. L'autre distale des extrémités axiales de la colonne est reliée à une roue directrice du véhicule - par exemple pour les cycles, les trottinettes ou les gyropodes - ou à un essieu de roues directrices - par exemple pour les véhicules automobiles et les quadricycles. Ceci permet d'orienter au sol la ou les roues directrices du véhicule selon l'amplitude du mouvement en rotation imprimé par le conducteur à la colonne de direction via l'organe de commande.

En cas d'accident provoquant un choc violent susceptible de blesser le conducteur, celui-ci peut être protégé vis-à-vis d'une transmission du choc par la colonne de direction. Par exemple, comme décrit dans le document de brevet US4805478, la colonne est agencée en organe télescopique dont les tronçons sont successivement accouplés axialement et en rotation. En cas de choc avant violent subi par le véhicule, la poussée axiale en résultant provoque un emboîtement axial des tronçons successivement les uns à l'intérieur des autres.

Pour les véhicules automobiles, la colonne de direction est en général reliée à un essieu de roues directrices via un système de direction assistée. L'utilisation d'un tel système facilite la tâche du conducteur à diriger le véhicule et améliore le confort de conduite en démultipliant les efforts à produire via un moteur électrique ou hydraulique. Les systèmes de direction assistée limitent les efforts que le conducteur doit fournir pour diriger le véhicule et peuvent contrôler la trajectoire du véhicule pour améliorer sa stabilité en progression.

Pour sa mise en œuvre, le système de direction assistée dispose potentiellement d'une information relative au couple appliqué à la colonne de direction par le volant constituant l'organe de commande, comme décrit dans les documents de brevet WO03/022658 et FR2550505. Il est notamment tenu compte d'un potentiel décalage angulaire entre le volant et la colonne lorsqu'ils sont couplés entre eux en rotation via un organe déformable en torsion.

Par ailleurs, les véhicules sont aussi potentiellement soumis à des vibrations répétées lors de leur progression, qui sont plus ou moins importantes selon leur aérodynamisme et/ou la qualité des amortisseurs dont ils sont équipés. Tel est notamment le cas lorsque le véhicule progresse sur une voie de circulation irrégulière, comme par exemple sur une route pavée. De telles vibrations peuvent altérer le confort de conduite du véhicule. Pour pallier cet inconvénient, il a été proposé d'équiper un volant de corps souples permettant d'amortir de telles vibrations transmises au volant par la colonne, comme décrit dans les documents de brevet EP0427915 et WO2019135768.

Cependant un problème général persiste pour l'absorption d'efforts provoqués par des chocs brefs subis occasionnellement par une ou plusieurs roues directrices du véhicule et suffisamment violents pour être ressentis dans l'organe de commande de direction. De tels chocs occasionnels sont par exemple causés par des irrégularités de la voie de circulation - comme des bossages et/ou des cavités communément désignés par "nids de poule" - ou par exemple encore lors d'un choc trottoir ou lorsqu'une roue directrice heurte modérément un obstacle.

De tels chocs sont alors générateurs de brusques secousses transitoires transmises à la colonne de direction, d'amplitudes non négligeables bien que limitées. Les systèmes de direction assistée équipant les véhicules automobiles n'étant pas adaptés pour absorber de telles secousses, celles-ci sont transmises à la colonne à son extrémité distale. Par suite, les efforts transitoires générés par de telles secousses remontent le long de la colonne jusqu'au conducteur manœuvrant l'organe de commande monté sur le support de volant de l'extrémité proximale de la colonne.

Un surdimensionnement du système de direction assistée pour neutraliser de telles secousses n'est pas approprié compte tenu du caractère bref et d'amplitude limitée de telles secousses, qui sont de surcroît occasionnelles. Ceci entraînerait en effet une complexification disproportionnée et un accroissement important de la masse et de l'encombrement du système de direction assistée, ainsi qu'un risque de blocage en rotation de la colonne de direction. Le système de direction assistée étant installé dans le compartiment moteur du véhicule déjà fortement encombré, son adaptation pour neutraliser les secousses apparaît alors rédhibitoire.

Il est dès lors recherché d'empêcher la transmission au conducteur de secousses transmises à l'organe de commande par la colonne de direction - par suite d'un choc appliqué brièvement contre au moins une roue directrice du véhicule lors de sa progression, et cela en évitant - pour les véhicules automobiles - d'exploiter un système de direction assistée auquel la colonne de direction est généralement en prise via son extrémité distale.

Pour rappel, les termes « distale » et « proximale » sont des notions relatives appréciées au regard de l'extension principale de la colonne de direction, l'organe de commande étant classiquement installé à l'extrémité proximale de la colonne et l'extrémité distale de la colonne étant en prise - directement ou indirectement - avec au moins une roue directrice du véhicule.

### EXPOSE DE L'INVENTION

L'invention vise à pallier les insuffisances de l'état de la technique concernant la transmission à l'organe de commande manœuvrable par le conducteur - tel qu'un volant, une manette ou un guidon - des remontées d'efforts transitoires à partir de l'extrémité distale de la colonne lorsqu'elle est soumise à au moins une brusque secousse à cette extrémité. De tels pics d'efforts transitoires - de durées brèves et à fréquence soutenue - peuvent notamment générer des blocages de direction, de brèves accélérations angulaires de l'organe de commande et/ou de brusques vibrations qui sont alors ressenties par le conducteur du véhicule.

L'invention vise à remédier à l'un et/ou l'autre de ces inconvénients, et plus spécifiquement à apporter une solution :
- qui soit entièrement mécanique tout en étant apte à neutraliser automatiquement les efforts transitoires préalablement à leur transmission à l'organe de commande ;
- qui soit aisément adaptable à un quelconque véhicule roulant au regard de ses caractéristiques propres concernant par exemple sa masse, les modalités de jonction de la colonne avec au moins une roue du véhicule et/ou le mode de propulsion du véhicule qui peut être motorisée - à des puissances motrices différentes selon le véhicule - ou être fournie par le conducteur par force musculaire ;
- qui soit autonome et puisse être montée à n'importe quel endroit de la colonne de direction, sans accroître sensiblement en masse l'ensemble de direction.

Pour ce faire, les efforts transitoires sont exploités selon l'invention pour provoquer concomitamment, c'est-à-dire simultanément et de manière conjointe :
- un découplage en rotation entre des tronçons coaxiaux de colonne en connexion libérable par captation de l'énergie transportée par la secousse pour les libérer de leur connexion et interrompre ainsi la transmission d'efforts de couple transitoires, et
- une mise en compression axiale élastique entre les tronçons ainsi découplés, cette compression élastique étant immédiatement suivie d'une détente qui provoque, par cinématique inverse, un re-couplage des tronçons.

A ce titre, l'invention a pour objet un procédé de neutralisation d'efforts transitoires générés par une remontée, entre une extrémité distale et une extrémité proximale d'une colonne de direction d'un véhicule, d'au moins une brusque secousse provoquée, depuis l'extrémité distale de la colonne, par un choc subi par au moins une roue directrice reliée à ladite colonne. Un organe de commande de direction de la trajectoire suivie par le véhicule est monté sur l'extrémité proximale de la colonne, cet organe étant manœuvrable en rotation par le conducteur du véhicule.

Selon le procédé de l'invention, il est effectué les opérations suivantes :
- monter en état de couplage coaxial sur un axe central de la colonne conformément à un couple de référence, via une liaison de couplage mobile, au moins deux tronçons de colonne, un tronçon distal avec un tronçon proximal solidaire en rotation de l'organe de commande, et ménager une zone élastique précontrainte axialement entre les tronçons montés à l'état de couplage conformément au couple de référence ;
- sous l'effet d'une mise en rotation du tronçon distal par un couple transitoire supérieur au couple de référence, provoquer un découplage automatique entre les tronçons distal et proximal par entraînement en rotation de la liaison de couplage soumis au couple transitoire et guidage en hélice de cette liaison dans le tronçon proximal, et
- concomitamment, sous l'effet du découplage entre les tronçons, entraîner en translation la liaison de couplage sur le tronçon distal, par un double guidage en combinaison selon un déplacement axial dans le tronçon distal et en hélice dans le tronçon proximal, vers la zone élastique pour la comprimer axialement entre les tronçons, la compression étant supérieure à un seuil de compression correspondant à sa précontrainte, puis
- par suite de la cessation de la secousse et corrélativement de l'épuisement des efforts transitoires, provoquer un re-couplage automatique entre les tronçons par détente de la zone élastique comprimée, ladite zone étant replacée à son seuil de précontrainte entre les tronçons accouplés selon le couple de référence et la liaison de couplage à l'état de couplage des tronçons entre eux.

Dans le présent texte, le qualificatif « proximal » se rapporte à la position d'un élément de structure plus proche de l'organe de commande qu'une position qualifiée de « distale » d'un autre élément de structure correspondant, par exemple deux extrémités, d'un même composant ou d'un autre composant.

Par application du procédé de l'invention, il est ainsi obtenu un découplage et un re-couplage automatiques entre les tronçons en utilisant seulement l'énergie développée par la secousse et l'élasticité intrinsèque de la zone élastique. La liaison de couplage étant liée en rotation avec le tronçon distal et doublement guidée - en en hélice dans le tronçon proximal et en translation axiale avec le tronçon distal -, la secousse en elle-même provoque automatiquement une mise en rotation relative entre les tronçons, faisant alors obstacle à une transmission du couple transitoire au tronçon proximal depuis le tronçon distal.

Le guidage en hélice permet notamment d'exercer sur la liaison mobile une poussée selon une composante en translation axiale, ce qui entraîne la liaison dans le guidage axial du tronçon distal vers la zone élastique suite au découplage des tronçons, puis vers la position de re-couplage des tronçons par la poussée inverse exercée par la zone élastique lors de sa détente.

Il ressort du procédé de l'invention qu'en cas d'une secousse supportée par le tronçon distal, les efforts transitoires sont exploités pour automatiquement interrompre le couplage entre les tronçons et réversiblement provoquer leur re-couplage par détente de la zone élastique. Les efforts transitoires sont ainsi neutralisés préalablement à leur transmission au tronçon proximal.

L'organe de commande solidaire en rotation du tronçon proximal est ainsi préservé d'une transmission de la secousse en évitant tout ressenti par le conducteur du véhicule. Une telle neutralisation est obtenue mécaniquement sans apport d'une énergie extérieure à celle générée par les efforts transitoires.

Avantageusement, lorsque les efforts transitoires sont susceptibles de comporter une composante d'effort axial génératrice d'une poussée axiale exercée sur le tronçon distal, la compression de la zone élastique permet également d'amortir une telle poussée axiale.

Selon une forme de mise en œuvre préférée du procédé de l'invention, qui exploite le fait que les secousses sont génératrices de décalages angulaires sur toute la circonférence de la colonne, la liaison de couplage est angulairement répartie de façon régulière selon une pluralité d'interfaces de couplage mobiles entre les tronçons suivant une circonférence. Ces interfaces mobiles sont guidées pour circuler en rotation et en translation axiale, sous l'effet d'une mise en rotation du tronçon distal par rapport au tronçon proximal, selon les cinématiques inverses suivantes.

Conformément à une cinématique « aller », chaque interface mobile se déplace en guidage curviligne d'au moins une portion d'hélice de plage angulaire limitée le long du tronçon proximal, ce qui permet à chaque interface mobile de se déplacer également vers la zone élastique par un guidage axial individuel sur le tronçon distal, jusqu'à l'application de ces interfaces contre la zone élastique qui produit un amortissement axial des efforts transitoires.

Puis, par suite de la cessation de la secousse, le re-couplage entre les tronçons est provoqué selon une cinématique « retour », inverse de la cinématique « aller », par détente de la zone élastique vers son seuil de précontrainte. Les interfaces mobiles sont alors repoussées par guidage sur le tronçon distal en translation axiale inverse et guidage curviligne inverse le long du tronçon proximal jusqu'à rétablir l'état de couplage des tronçons entre eux selon le couple de référence.

Une telle distribution régulière des interface mobiles permet aussi de conforter la prise d'appui axiale des interfaces mobiles lors de la compression élastique qui est alors répartie de manière homogène.

Il est précisé que la mise en translation axiale des interface mobiles est réalisée suivant des directions parallèles à l'axe central de rotation des tronçons co-axialement. La liaison de couplage ou les interfaces sont dites mobiles dans la mesure où « mobile » signifie « qui peut se mouvoir ».

Selon une forme de mise en œuvre avantageuse, en cas d'un maintien des tronçons à l'état de découplage, un accouplement prioritaire entre les tronçons peut être provoqué par maintien des interfaces de couplage mobiles à une extrémité de leur plage angulaire du tronçon proximal, à partir d'une manœuvre en rotation opérée par le conducteur ou un opérateur du tronçon proximal via l'organe de commande.

Cette mise en œuvre permet au conducteur de pouvoir entraîner, pour des raisons de sécurité, la colonne en rotation par le tronçon distal lui-même entraîné par le tronçon proximal en toute situation, par exemple en cas d'un blocage des tronçons en état de découplage ou en cas de secousses à fréquences soutenues appliquées à la colonne, maintenant les tronçons à l'état de découplage. Ainsi, le conducteur peut contrôler en permanence la trajectoire du véhicule via l'organe de commande.

L'invention a également pour objet un système d'accouplement axial et en rotation entre un tronçon distal et un tronçon proximal d'une colonne de direction d'un véhicule, dédié à la mise en œuvre d'un procédé tel qu'il vient d'être décrit.

Un tel système d'accouplement est principalement reconnaissable en ce que lesdits tronçons sont au moins en partie emboîtés coaxiaux et accouplés de montage l'un à l'intérieur de l'autre, définissant une zone d'emboîtement. Un organe élastique qui constitue ladite zone élastique est monté axialement précontraint entre les tronçons. Ces tronçons sont accouplés entre eux en rotation via une pluralité d'éléments de couplage mobiles constituant la liaison de couplage, radialement et régulièrement intercalés entre les tronçons dans leur zone d'emboîtement.

Les éléments de couplage, liés en rotation au tronçon distal, sont montées mobiles sur ce tronçon distal le long de guides axiaux répartis régulièrement en périphérie sur ce même tronçon distal. Et ces éléments de couplage sont conjointement montés mobiles sur le tronçon proximal dans des guides en circulation curviligne le long des portions d'hélice s'étendant individuellement, à partir d'une position de couplage des tronçons entre eux au couple de référence, jusqu'à au moins une butée angulaire. En circulation curviligne, chaque élément mobile se trouve en position de découplage des tronçons en décalage angulaire et en décalage axial par rapport à sa position de couplage, l'organe élastique étant comprimé en position de découplage des tronçons par les éléments mobiles appliqués axialement.

Il est compris ici que les éléments de couplage, les guides axiaux et guides curvilignes sont identiques. De plus il apparaît comme acquis, dans le contexte de l'invention, que le tronçon distal est solidaire en rotation de l'extrémité distale de la colonne qui est reliée - directement ou indirectement - à au moins une roue du véhicule, et que le tronçon proximal est solidaire en rotation - directement ou indirectement - avec l'organe de commande. Un tel jeu de tronçons peut être positionné sur la colonne à un quelconque emplacement situé entre ses extrémités distale et proximale.

Avantageusement, chaque portion d'hélice du guide curviligne du tronçon proximal a une forme de « V » formée de deux ailes de poussée inclinées vers l'axe commun des tronçons. Ces ailes s'étendent symétriquement de part et d'autre de la position de couplage entre tronçons affectée à chaque portion. Lesdites ailes ont chacune une butée angulaire pour extrémité, la position de couplage étant la position de chaque guide la plus éloignée de la zone élastique et les positions des butées étant les plus proches. Ainsi, chaque élément mobile est monté de circulation entre la position de couplage et l'une ou l'autre des butées angulaires du tronçon distal selon le sens de rotation de ce tronçon.

Selon des modes de réalisation préférés :
- les guides curvilignes du tronçon proximal et les guides axiaux du tronçon distal sont formés de cavités allongées creusées en surface et sont munies de parois latérales, les guides curvilignes ayant de préférence au moins une paroi latérale formant une butée longitudinale qui permet d'exercer une prise d'appui axiale sur les éléments mobiles en direction de la zone élastique ;
- dans la zone d'emboîtement, le tronçon distal est muni à son extrémité proximale d'un fût d'emboîtement axial s'étendant à l'intérieur d'une couronne que comporte le tronçon proximal, les guides curvilignes étant ménagés sur une face interne de la couronne et les guides axiaux sur une face externe du fût en vis-à-vis de ladite face interne ;
- les tronçons sont immobilisés axialement en couplage l'un à l'autre selon une position de montage axiale pérenne prédéfinie : cette immobilisation axiale des tronçons l'un par rapport à l'autre permet de conforter la robustesse du système d'accouplement en fonctionnement et de limiter leur fatigue en cas de secousses ; une telle disposition permet aussi de limiter l'encombrement axial du système d'accouplement - et ainsi de faciliter son implantation sur la colonne d'un quelconque véhicule roulant - tout en permettant une exploitation des éléments de couplage pour comprimer l'organe élastique à l'état de découplage des tronçons.

Le tronçon proximal est placé axialement en appui contre l'organe élastique via les éléments de couplage, selon une chaîne d'appuis axiaux successifs entre des composants du système d'accouplement, cette chaîne étant organisée pour placer l'organe élastique de montage en précontrainte entre les tronçons à l'état de couplage et en compression par les éléments de couplage à l'état de découplage des tronçons.

Selon une forme de réalisation avantageuse, le système d'accouplement présente ainsi les composants suivants afin de former une chaîne d'appuis axiaux:
- l'organe élastique axialement interposé entre un premier butoir solidaire du tronçon distal et un deuxième butoir monté autour du tronçon distal ;
- le premier butoir étant formé par une face proximale d'un écrou distal et le deuxième butoir prend appui contre les éléments de couplage qui prennent eux-mêmes appui contre la paroi de butée longitudinale du guide curviligne qui leur est affectée ;
- le tronçon distal et le tronçon proximal sont immobilisés axialement l'un à l'autre entre des écrous qui sont montés par vissage autour du tronçon distal, dont l'écrou distal et un écrou proximal placés axialement de part et d'autre du tronçon proximal ; et
- l'organe élastique est précontraint entre l'écrou distal et le tronçon proximal.

Selon des variantes, le deuxième butoir peut être formé par une face distale de la couronne du tronçon proximal ou par une face distale d'un troisième épaulement que comporte un manchon monté axialement coulissant autour du tronçon distal.

Dans le premier cas, les portions d'hélice de circulation des éléments de couplage dans le tronçon proximal sont formées de glissières présentant deux parois latérales parallèles dont une paroi distale qui prend appui contre les éléments de couplage et la paroi proximale de butée longitudinale ménagée par une face distale d'un deuxième épaulement de la couronne. Dans ce cas, les éléments de couplage sont directement en contact avec l'organe élastique.

Dans le deuxième cas, chaque portion d'hélice comporte une rampe ne présentant que la paroi proximale de butée longitudinale ménagée de la même façon que dans le premier cas, le manchon qui sert de deuxième butoir ayant une avancée qui s'étend axialement pour prendre appui contre les éléments de couplage.

De préférence, un organe de roulement est radialement interposé entre le tronçon distal et le tronçon proximal à leur extrémité proximale. Un tel organe de roulement comporte avantageusement une bague intérieure, axialement bloquée entre l'écrou proximal et un premier épaulement du tronçon distal, et une bague extérieure axialement bloquée entre un deuxième épaulement intérieur formé sur le tronçon proximal et un flasque fixé axialement au tronçon proximal à son extrémité proximale.

La qualité de la mise en mobilité des éléments mobiles qui peuvent être roulants ou coulissants, en circulation en hélice sur le tronçon proximal et en translation axiale sur le tronçon distal, est optimisée tout en limitant la masse globale et/ou l'usure des éléments de couplage.

L'invention a aussi pour objet une colonne de direction d'un véhicule comportant au moins un jeu de tronçons, dont un tronçon distal et un tronçon proximal, accouplés entre eux en rotation et axialement. Une telle colonne de direction relevant de l'invention est reconnaissable en ce que lesdits tronçons sont accouplés entre eux via un système d'accouplement tel qu'il vient d'être décrit.

De préférence, le système d'accouplement est installé sur la colonne à son extrémité proximale, le tronçon proximal étant avantageusement agencé en support dudit organe de commande de la trajectoire suivie par le véhicule.

Dans ce contexte, un autre objet de l'invention concerne un véhicule roulant équipé d'une colonne de direction du véhicule reliée à son extrémité distale à au moins une roue du véhicule et munie à son extrémité proximale d'un organe de commande de la trajectoire suivie par le véhicule. Un tel véhicule roulant est reconnaissable en ce que la colonne de direction est conforme à la description qui vient d'en être faite.

### PRESENTATION DES FIGURES

D'autres caractéristiques et avantages de l'invention ressortiront à la lecture qui suit d'un exemple de réalisation détaillé, en référence aux figures suivantes qui représentent respectivement :
[Fig. 1] Les figures 1,1a et 1b, des illustrations en perspective éclatée et une fois monté selon deux axes de vue opposés d'un système d'accouplement entier ou partiel, configuré selon l'invention pour être installé sur une colonne de direction d'un véhicule automobile à son extrémité proximale, en ménageant un support de volant de direction de la trajectoire suivie par le véhicule ;
[Fig. 2] La figure 2, une vue en demie coupe axiale du système d'accouplement représenté sur la figure 1, légèrement inclinée axialement ;
[Fig. 3] La figure 3, une vue de face d'un tronçon proximal du système d'accouplement représenté sur les figures 1 et 2, ledit tronçon proximal étant agencé en une couronne formant le support du volant ;
[Fig. 4] La figure 4, une vue en coupe axiale du tronçon proximal formé de la couronne participante du système d'accouplement représenté sur la figure 3 ;
[Fig. 5] La figure 5, une vue axiale d'un fût formant un tronçon distal du système d'accouplement représenté sur les figures 1 et 2, le tronçon distal étant agencé pour être monté à l'extrémité proximale de la colonne de direction, et
[Fig. 6] La figure 6, une vue de face du fût représenté sur la figure 5.

### DESCRIPTION DETAILLEE

Les figures et leurs descriptions détaillées non limitatives, exposent l'invention selon des modalités particulières qui ne sont pas restrictives quant à la portée de l'invention. Les figures et leurs descriptions détaillées d'un exemple de réalisation de l'invention peuvent servir à mieux la définir, si besoin en relation avec la description générale qui vient d'en être faite.

Par ailleurs pour éviter une surcharge des figures et faciliter leur lecture, les numéros de référence affectés aux termes et/ou aux notions utilisés pour décrire l'invention et indiqués sur l'une quelconque des figures, sont potentiellement repris dans la description d'une quelconque autre figure sans impliquer leur présence sur l'ensemble des figures.

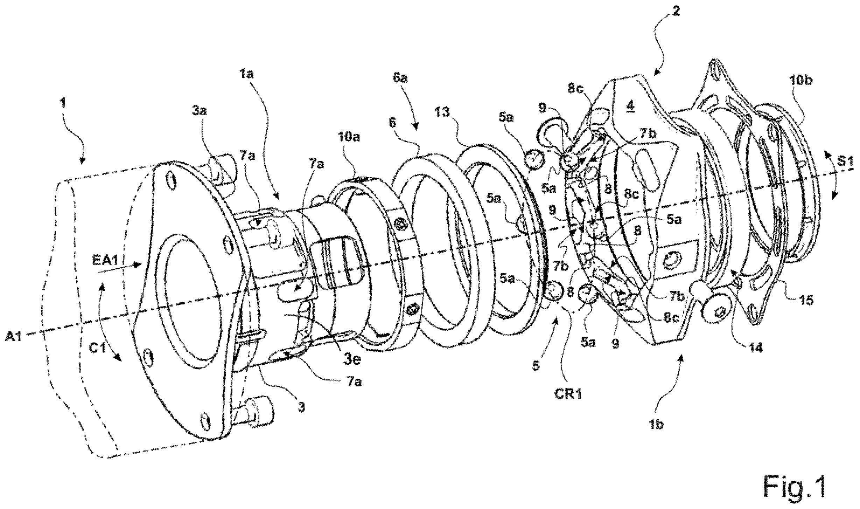

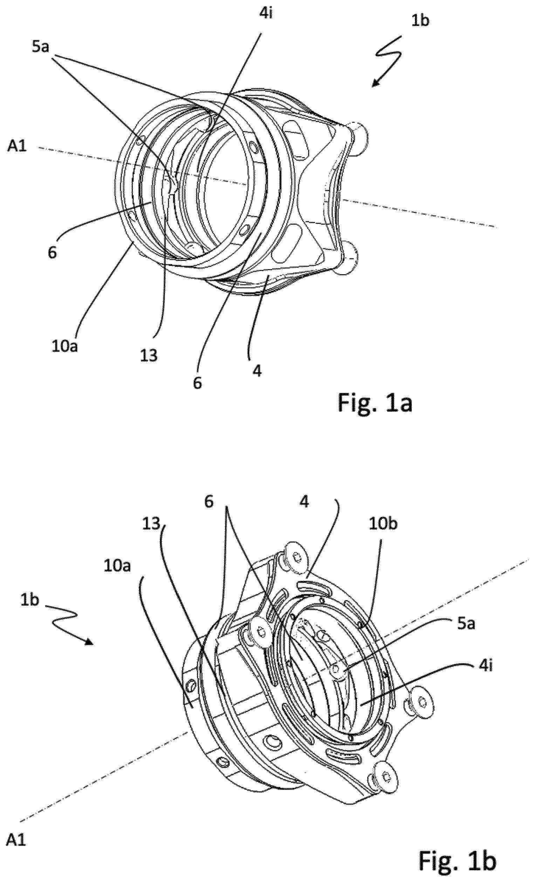

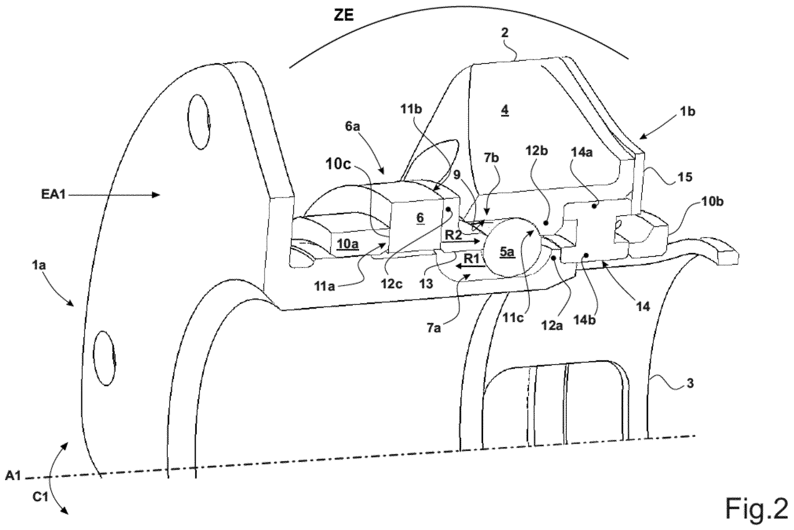

Sur les figures 1 et 2, une colonne 1 de direction d'un véhicule automobile est accouplée en rotation et axialement avec un support 2 de volant de commande de la trajectoire suivie par le véhicule, ici un volant. Le conducteur du véhicule peut manœuvrer en rotation ledit volant pour entraîner la colonne 1 en rotation et ainsi diriger le véhicule. Tel que classiquement, l'extrémité distale de la colonne 1 - non représentée - est reliée à au moins une roue directrice du véhicule, directement ou indirectement, par exemple via un système de direction assistée équipant un véhicule automobile.

A cet effet, une extrémité proximale de la colonne 1 est munie d'un tronçon distal 1a agencé en un fût 3 équipé d'une platine de fixation 3a. Tel que représenté sur la figure 2, le fût 3 est partiellement emboîté coaxial selon l'axe central A1 à l'intérieur d'un tronçon proximal 1b comportant une couronne 4 formant ledit support 2. L'emboîtement coaxial entre le tronçon distal 1a et le tronçon proximal 1b est réalisé suivant un axe commun qui se confond avec l'axe central A1 d'extension d'un système d'accouplement conforme à l'invention.

Sur les figures 1a et 1b orientées selon des points de vue distal, et respectivement proximal, seul le tronçon proximal 1b apparaît une fois monté. Ces figures 1a et 1b montrent la compacité du système d'accouplement selon l'invention, le tronçon distal 1a étant monté à l'intérieur du tronçon proximal 1b (sauf la platine de fixation 3a qui émerge radialement de l'écrou 10a du tronçon proximal 1b, cf. la figure 2).

Les modalités de montage entre le tronçon distal 1a et le tronçon proximal 1b ménagent entre eux la mise en place de leur système d'accouplement procurant un découplage suivi d'un re-couplage automatiques entre les tronçons 1a, 1b en cas de secousses transitoires supportées par la colonne 1 à son extrémité distale.

De telles secousses se produisent notamment lorsque le véhicule circule sur une voie présentant des irrégularités, et il est visé par l'invention d'éviter leur transmission via le volant au conducteur afin de ne pas affecter son confort de conduite. Les secousses sont génératrices d'efforts transitoires qui sont supportés brièvement par la colonne 1 et qu'il est visé par l'invention de neutraliser pour interdire leur transmission au tronçon proximal 1b par le tronçon distal 1a. De tels efforts transitoires sont générateurs d'un couple transitoire C1 d'entraînement en rotation du tronçon distal 1a et d'un effort axial EA1 transitoire supporté axialement par le tronçon distal 1a.

En station de montage entre le tronçon distal 1a et le tronçon proximal 1b, les tronçons 1a, 1b sont accouplés en rotation selon un couple de référence prédéfini. Dans le cas où le couple transitoire C1 est supérieur au couple de référence, celui-ci provoque automatiquement un découplage entre les tronçons 1a, 1b. Les efforts transitoires sont alors neutralisés sur la durée d'application des secousses à la colonne 1 - ce qui interdit leur transmission au tronçon proximal 1b - le découplage entre les tronçons 1a, 1b étant suivi d'un re-couplage automatique des tronçons 1a, 1b entre eux par suite de la cessation de la secousse.

A cet effet, le tronçon distal 1a et le tronçon proximal 1b sont positionnés de montage à l'état de couplage entre eux, comme illustré sur la figure 2. A l'état de couplage, le conducteur peut diriger le véhicule automobile en manœuvrant le volant et par suite entraîner la colonne 1 en rotation via l'accouplement détaillé ci-dessous entre le tronçon distal 1a et le tronçon proximal 1b.

En position de montage et donc à l'état de couplage des tronçons 1a, 1b l'un à l'autre, les tronçons 1a, 1b sont accouplés entre eux en rotation via une liaison 5 composée d'une pluralité d'éléments de couplage 5a conformés en billes. Un organe élastique 6 - tel que formé d'une bague en élastomère par exemple - est axialement interposé en précontrainte entre les tronçons 1a, 1b, en ménageant entre eux une zone élastique 6a de compression.

Les billes de couplage 5a prennent axialement appui contre l'organe élastique 6 dont au moins la mise en précontrainte maintient les billes de couplage 5a en une position de couplage 8c à l'état de couplage des tronçons 1a, 1b entre eux comme repéré sur la figure 1 et les figures 3 et 4.

Le tronçon proximal 1b est immobilisé axialement sur le tronçon distal 1a, en étant en permanence maintenu en une position axiale pérenne prédéfinie par rapport au tronçon distal 1a. Il est précisé ici que la position axiale relative entre les tronçons 1a, 1b persiste quelle que soit la situation de mise à l'état de couplage ou de mise à l'état de découplage entre les tronçons 1a, 1b.

Les billes de couplage 5a sont interposées radialement entre les tronçons 1a, 1b, dans la zone d'emboîtement ZE entre le fût 3 et la couronne 4 (cf. figure 2). Les billes de couplage 5a sont angulairement réparties suivant une circonférence CR1 dans l'espace interstitiel entre les tronçons 1a, 1b.

Les billes de couplage 5a sont individuellement logées à l'intérieur d'un jeu de guides 7a, 7b que comportent respectivement la face externe 3e du fût 3 du tronçon distal 1a et la face interne 4i de la couronne 4 du tronçon proximal 1b. Chacun des jeux de guides 7a, 7b comprend un guide axial 7a et un guide curviligne 7b.

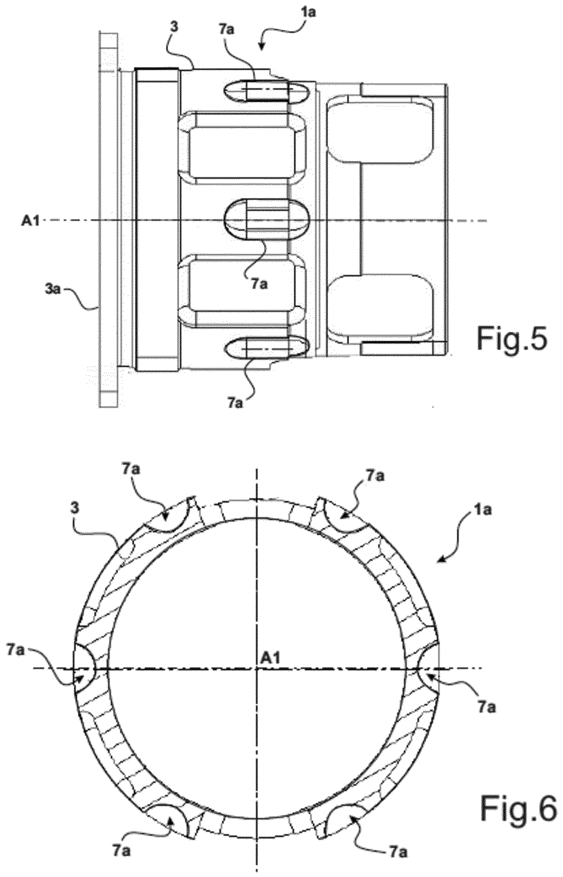

Les guides axiaux 7a sont des guides de circulation en translation des billes de couplage 5a ménagés en périphérie du fût 3 - comme représenté sur les figures 1-2 et les figures 5-6. Les guides curvilignes 7b sont ménagés à la face intérieure 4i (cf. figures 1a et 1b) de la couronne 4 - comme représenté sur les figures 1-2 et les figures 3-4. Les guides curvilignes 7b sont des guides de circulation en hélice des billes de couplage 5a par rapport au tronçon proximal 1b et sous contrainte de poussée axiale des billes de couplage 5a provoquant leur circulation axiale à l'intérieur des guides axiaux 7a du tronçon distal 1a vers l'organe élastique 6 lors du découplage des tronçons 1a, 1b.

Les guides curvilignes 7b s'étendent sensiblement suivant des arcs de circonférence globalement orientés suivant ladite circonférence CR1 de répartition angulaire des billes de couplage 5a comme représenté sur la figure 1. Pour chacun des jeux de guides 7a, 7b, le guide axial 7a et le guide curviligne 7b sont formés de cavités ouvertes l'une sur l'autre - dont respectivement une cavité oblongue axialement concernant les guides axiaux 7a et une cavité configurée en au moins une portion d'hélice concernant les guides curviligne 7b - qui logent conjointement la bille de couplage 5a qui leur est affectée.

Sur les figures 1 et 3-4, les guides curvilignes 7b s'étendent chacun sur une plage angulaire limitée entre leurs extrémités borgnes qui ménagent des butées angulaires 8. Les butées angulaires 8 sont réparties à équidistance de part et d'autre de la position de couplage 8c des billes de couplage 5a.

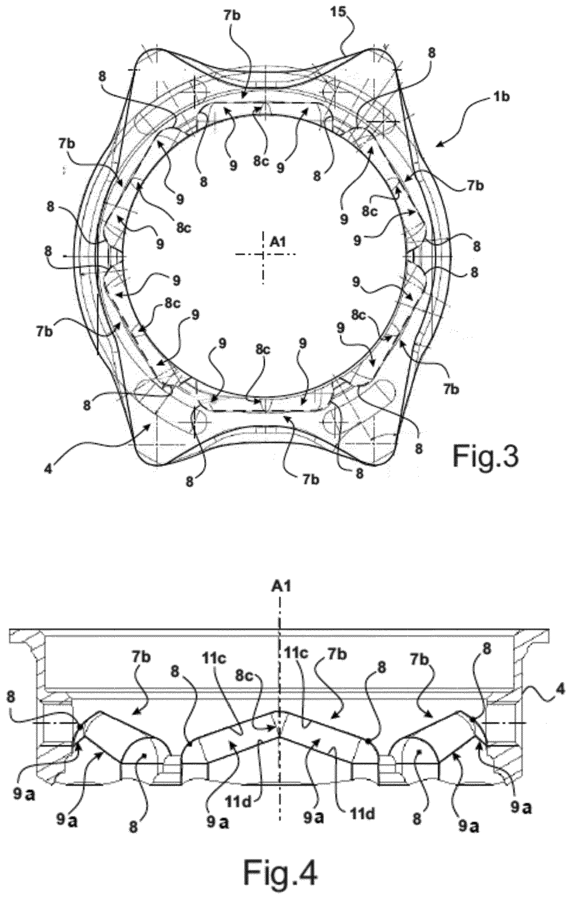

Plus précisément, chacune des portions d'hélice des guides curviligne 7b est formée de deux rampes 9 qui s'étendent symétriquement de part et d'autre de la position de couplage 8c des billes de couplage 5a, de sorte les rampes 9 forment les deux ailes d'un guide curviligne 7b en forme de « V » dont la pointe ménage ladite position de couplage 8c. En ce sens, les rampes 9 sont dites « inclinées » - par rapport à un plan perpendiculaire à l'axe de rotation central A1 des tronçons 1a, 1b - depuis la position de couplage 8c des billes de couplage 5a vers l'axe de rotation A1. Sur les figures 3 et 4, les rampes 9 sont sensiblement conformées chacune en tronçon d'hélice, mais apparaissent rectilignes du fait de l'orientation de face et en coupe axiale des vues.

La position de couplage 8c des billes de couplage 5a est ménagée dans la zone de jonction entre les rampes 9 qui sont concourantes en ce point de couplage. Cette position de couplage 8c est plus éloignée de l'organe élastique 6 que les butées angulaires 8. Selon le sens de rotation du tronçon distal 1a, les billes de couplage 5a circulent le long de l'une ou de l'autre des rampes 9 de chaque guide curviligne 7b à partir de la position de couplage 8c qui leur est commune.

Selon la valeur prédéfinie du couple de référence - ou autrement dit le seuil de mise en précontrainte de la zone élastique 6a entre les tronçons 1a, 1b - un aménagement de forme de ladite zone de jonction entre les rampes 9 de deux guides 7b consécutifs peut être avantageusement prévu pour former un organe de retenue des billes de couplage 5a, confortant leur maintien en position de couplage 8c à l'intérieur des guides curvilignes 7b lorsque les tronçons 1a, 1b sont positionnés à l'état de couplage entre eux, conformément au couple de référence.

Ainsi, les guides axiaux 7a autorisent une mobilité des billes de couplage 5a en translation axiale sur le tronçon distal 1a en périphérie du fût 3 et en rotation inclinée par rapport au tronçon proximal 1b par entraînement des billes de couplage 5a par le tronçon distal 1a. Simultanément et conjointement, les guides curvilignes 7b provoquent une mobilité des billes de couplage 5a contre la face interne 4i (cf. figures 1a et 1b) de la couronne 4 via les rampes 9, selon un trajet sensiblement hélicoïdal suivant une plage angulaire limitée entre les butées angulaires 8.

Tel que représenté sur la figure 2, la couronne 4 est maintenue sur le fût 3 en permanence en ladite position axiale de montage pérenne - entre deux écrous 10a, 10b qui sont vissés sur le fût 3 respectivement à l'une et l'autre des extrémités axiales du système d'accouplement. Il est ainsi procuré un positionnement axial relatif pérenne entre le tronçon distal 1a et le tronçon proximal 1b. L'organe élastique 6 est axialement interposé de montage en précontrainte via les billes de couplage 5a, entre un premier butoir 11a et un deuxième butoir 11b prenant axialement appui de part et d'autre de l'organe élastique 6.

Le premier butoir 11a est formé par une face proximale 10c de l'écrou distal 10a qui est appliqué contre une face distale de l'organe élastique 6. Le deuxième butoir 11b est formé par une face distale d'un troisième épaulement 12c que comporte un manchon 13 ou, alternativement dans un exemple sans manchon, la face distale est la face distale de la couronne 4.

Le manchon 13 est monté axialement coulissant autour du fût 3 en s'étendant axialement partiellement en surplomb des guides axiaux 7a. Le manchon 13 est axialement interposé entre une face proximale de l'organe élastique 6 et les billes de couplage 5a. Chaque bille de couplage 5a prend elle-même axialement appui contre la butée 11c formée par une paroi longitudinale ménagée par un deuxième épaulement intérieur 12b formé à l'intérieur de la couronne 4 que comporte le tronçon proximal 1b.

On notera tel que particulièrement visible sur la figure 4, que les guides curvilignes 7b peuvent, dans une variante, être agencés en glissière 9a pour conforter le guidage en mobilité des billes de couplage 5a sur le tronçon proximal 1b. De telles glissières 9a peuvent être formées en ménageant des deuxièmes parois distales 11d de la couronne 4 orientées, parallèlement aux parois des deuxièmes épaulements 12b formant les butées longitudinales 11c.

Les deuxièmes parois 11d présentent une extension radiale adaptée pour ne pas faire obstacle à la circulation des billes de couplage 5a à l'intérieur des guides axiaux 7a ni à leur application contre l'organe élastique 6. Dans cette variante, le deuxième butoir 11b est formé par une face distale de la couronne 4 qui remplace manchon 13 et les deuxièmes parois distales 11d prennent appui contre les billes de couplage 5a.

A l'état de couplage des tronçons 1a, 1b entre eux, les billes de couplage 5a sont maintenus en leur position de couplage 8c, sous l'effet de la mise en précontrainte de l'organe élastique 6 contre lequel les billes de couplage 5a prennent axialement appui.

A l'état de découplage des tronçons 1a, 1b sous l'effet de secousses supportées par la colonne 1, les billes de couplage 5a circulent à l'intérieur de l'une ou l'autre des rampes 9 des guides curviligne 7b en fonction du sens de rotation du tronçon distal 1a par rapport au tronçon proximal 1b, en étant maintenues appliquées axialement contre les butées longitudinales 11c et contre l'organe élastique 6 pour le comprimer à un seuil de compression supérieur à la précontrainte de l'organe élastique 6.

Un organe de roulement 14 est radialement interposé entre le fût 3 et la couronne 4. Une bague extérieure 14a de l'organe de roulement 14 est axialement interposée entre la face proximale du deuxième épaulement 12b et un flasque 15 fixé à la couronne 4. Une bague intérieure 14b de l'organe de roulement 14 s'étend axialement en interposition entre un écrou proximal 10b et un premier épaulement 12a que comporte le fût 3 du tronçon distal 1a.

Autrement dit comme illustré sur la figure 2, les billes de couplage 5a prennent des appuis radialement antagonistes en fond des guides axiaux 7a et en fond des guides curvilignes 7b en procurant un couplage entre les tronçons 1a, 1b en l'absence de secousses supportées par la colonne 1. Suivant l'extension axiale du système d'accouplement, des prises d'appui axiales sont réalisées successivement entre les écrous 10a, 10b en maintenant en permanence la couronne 4 autour du fût 3 en une position axiale pérenne, que ce soit en position de couplage ou en position de découplage des tronçons 1a, 1b.

Ainsi suivant une chaîne de prise d'appuis axiaux successifs :
- l'organe élastique 6 est axialement interposé en précontrainte entre l'écrou distal 10a et le manchon 13, le manchon 13 prenant lui-même axialement appui contre les billes de couplage 5a, eux-mêmes prenant axialement appui contre les butées axiales 11c ménagées par le deuxième épaulement 12b que comporte la couronne 4 ;
- la couronne 4 prend axialement appui contre la bague extérieure 14a de l'organe de roulement 14 via le deuxième épaulement 12b, ladite bague extérieure 14a prenant elle-même appui contre le flasque 15 qui est fixé à la couronne 4 à son extrémité proximale, et la couronne 4 prend axialement appui contre le fût 3 via la bague intérieure 14b de l'organe de roulement 14 qui est axialement serrée contre le premier épaulement 12a du fût 3 par l'écrou proximal 10b.

De telles prises d'appui des billes de couplage 5a, d'une part radialement antagonistes en fond des guides axiaux 7a et des guides curvilignes 7b, et d'autre part axialement selon la dite chaîne de prise d'appuis axiaux, perdurent tant à l'état de couplage qu'à l'état de découplage entre le fût 3 et la couronne 4.

Ainsi, dans un système d'accouplement tel que dans l'exemple de réalisation qui vient d'être présenté, un découplage entre le fût 3 et la couronne 4 est automatiquement réalisé lorsqu'un couple transitoire C1 provoqué par une secousse que subit le tronçon distal 1a excède le couple de référence. Ledit découplage est automatiquement suivi d'un re-couplage entre le fût 3 et la couronne 4 à l'issue de l'application de la secousse à la colonne 1, chaque bille 5a revenant à sa position de couplage 8c.

A l'état de couplage des tronçons 1a, 1b entre eux au couple de référence conforme à la position de montage entre le fût 3 et la couronne 4, les billes de couplage 5a sont maintenues en leur position de couplage 8c sur la couronne 4 et en position axiale entre les parois 11c, 11d des glissières 9a formant les guides curvilignes 7b ou, en reprenant l'exemple illustré en particulier par les figures 1 et 2, entre le manchon 13 et les butées longitudinales formées par les parois 11c ménagées dans cet exemple par le deuxième épaulement 12b que comporte la couronne 4. Le conducteur peut dès lors entraîner en rotation la colonne 1 via le volant monté sur la couronne 4, suivant l'un et/ou l'autre des sens de rotation de la colonne 1 pour diriger le véhicule.

Lorsqu'un couple transitoire C1 provoqué par une secousse supportée par la colonne 1 à son extrémité distale excède le couple de référence, le fût 3 est entraîné en rotation suivant l'un ou l'autre de ses sens de rotation en fonction du sens d'application du couple transitoire C1 à la colonne 1. Une mobilité relative en rotation de la colonne 1 par rapport au support 2 est autorisée par circulation des billes de couplage 5a à l'intérieur des guides curvilignes 7b que comporte la couronne 4, sur une plage angulaire limitée à l'extension des guides curvilignes 7b entre la position de couplage 8c des billes de couplage 5a et l'une ou l'autre des butées angulaires 8.

Il est ainsi réalisé sous l'effet du couple transitoire C1 appliqué au tronçon distal 1a, un découplage automatique entre le tronçon distal 1a et le tronçon proximal 1b qui interdit une transmission du couple transitoire C1 à la couronne 4 par le fût 3. Par ailleurs, les billes de couplage 5a circulant à l'intérieur des guides curvilignes 7b prennent appui radialement contre l'une ou l'autre des rampes 9 selon le sens de rotation relatif entre les tronçons 1a, 1b, en étant maintenus axialement appliqués en force contre les butées longitudinales 11c le long du parcours suivi par les billes de couplage 5a contre les rampes 9.

La circulation des billes de couplage 5a le long des rampes 9 provoque leur refoulement R1 (cf. figure 2) et par suite leur circulation à l'intérieur des guides axiaux 7a vers l'organe élastique 6. Les billes de couplage 5a circulent alors angulairement en force le long des rampes 9. Ceci a pour effet de provoquer également leur déplacement en translation à l'intérieur des guides axiaux 7a en direction de l'organe élastique 6. La course en translation des billes ou autres éléments de couplage 5a à l'intérieur des guides axiaux 7a est extemporanément déterminée selon le décalage angulaire entre les tronçons 1a, 1b, lui-même déterminé selon l'amplitude du couple transitoire C1 appliqué au tronçon distal 1a.

Les billes de couplage 5a prennent alors appui axialement contre le manchon 13, qui est repoussé axialement par les billes de couplage 5a contre l'organe élastique 6. Ceci a pour effet d'amortir également les efforts axiaux EA1 générés par les efforts transitoires auxquels la colonne 1 est soumise. Il est ainsi procuré, à partir de l'application au tronçon distal 1a d'un dit couple transitoire C1 supérieur au couple de référence, concomitamment :
- non seulement un amortissement des efforts de couple générés par la secousse par un découplage automatique entre les tronçons 1a, 1b par circulation en hélice des billes de couplage 5a à l'intérieur des guides curvilignes 7b,
- mais aussi un amortissement axial des efforts axiaux EA1 générés par la secousse, évitant leur transmission au tronçon proximal 1b par le tronçon distal 1a par application axiale des billes de couplage 5a qui sont repoussées R1 axialement par les rampes 9 contre l'organe élastique 6.

Lorsque la colonne 1 n'est plus soumise à une secousse, il est provoqué une circulation inverse des billes de couplage 5a le long des rampes 9 à l'intérieur des guides curvilignes 7b, vers leur position de couplage 8c. L'organe élastique 6 n'étant plus soumis à compression par les billes de couplage 5a, ces derniers sont inversement refoulés R2 (cf. figure 2) en translation à l'intérieur des guides axiaux 7a, en éloignement axial de l'organe élastique 6, par suite de la détente de l'organe élastique 6 au seuil de sa mise en précontrainte entre les tronçons 1a, 1b.

Lorsque les billes de couplage 5a sont placés en leur position de couplage 8c, un re-couplage automatique est procuré entre la colonne 1 et le support 2 du volant manœuvrable par le conducteur du véhicule. Les secousses étant brèves - typiquement d'une durée inférieure à la demi-seconde - le conducteur peut diriger le véhicule sans avoir ressenti une secousse transmise à la colonne 1 à son extrémité distale.

Une secousse à laquelle est soumise la colonne 1 en cas d'un choc supporté par une roue directrice du véhicule - par exemple en cas d'un choc trottoir ou en cas d'un choc provoqué par une irrégularité de la voie de circulation - est non seulement d'une durée brève, mais aussi génératrice d'un couple transitoire C1 d'amplitude réduite. L'extension des guides curvilignes 7b peut être limitée pour optimiser le nombre de billes de couplage 5a - limité au nombre de six sur l'exemple illustré - sans pour autant accroître outre mesure l'encombrement du système d'accouplement.

En outre, l'extension limitée des guides curvilignes procurent une autre utilité. Il est en effet pris en compte une situation selon laquelle un découplage entre la colonne 1 et le support 2 serait répétitif et/ou perdurerait au-delà d'une durée admissible par le conducteur pour lui permettre de diriger le véhicule. Le système d'accouplement est en outre organisé pour palier une situation selon laquelle la colonne 1 serait maintenue durablement en situation de blocage et/ou subirait des secousses à fréquences soutenues. Il est à cet effet prévu un accouplement prioritaire entre les tronçons 1a, 1b qui permet au conducteur de conserver en permanence un contrôle directionnel du véhicule.

Pour placer le système d'accouplement en accouplement prioritaire entre les tronçons 1a, 1b, le conducteur peut manœuvrer le tronçon proximal 1b en rotation jusqu'à placer les billes de couplage 5a en application contre l'une ou l'autre des butées angulaires 8 ménagées aux extrémités des guides curvilignes 7b. Ceci provoque une liaison et un entraînement en hélice du tronçon distal 1a par le tronçon proximal 1b, via les billes de couplage 5a qui prennent appui contre l'une ou l'autre des butées angulaires 8 selon le sens S1 (cf. figure 1) de mise en rotation du tronçon proximal 1b par le conducteur.

Le conducteur peut ainsi en toute situation contrôler la trajectoire du véhicule par entraînement de la colonne 1 via le système d'accouplement qui est placé par le conducteur en accouplement prioritaire entre les tronçons 1a, 1b, y compris potentiellement à un couple d'entraînement supérieur au couple de référence.

Il est à relever la simplicité structurelle et la limitation des composants du système d'accouplement par suite d'un cumul de fonctions par certains de ces composants, notamment pour les composants qui suivent.

En ce qui concerne notamment les guides curvilignes 7b, ceux-ci :
- autorisent un découplage entre les tronçons 1a, 1b par circulation angulaire de la liaison 5 mobile - billes de couplage 5a notamment - par rapport au tronçon proximal 1b, par suite de la mise en rotation du tronçon distal 1a soumis à une secousse dont la liaison de couplage 5 est radialement solidaire ;
- provoquent un refoulement de la liaison de couplage 5 contre la zone élastique 6a pour amortir les efforts axiaux EA1 générés par la secousse appliquée au tronçon distal 1a, par suite de la prise d'appui de la liaison de couplage 5 contre les rampes 9 et de sa circulation en translation à l'intérieur des guides axiaux 7b que comporte le tronçon distal 1a ;
- guident la liaison de couplage 5 vers sa position de couplage en phase de re-couplage des tronçons 1a, 1b entre eux, par suite de la détente de la zone élastique 6a repoussant la liaison de couplage 5 en application contre les rampes 9 que comportent les guides curvilignes 7 ;
- procurent l'accouplement prioritaire entre les tronçons 1a, 1b via les butées angulaires 8 bornant les guides curvilignes 7b.

En ce qui concerne la zone élastique 6a, celle-ci est exploitée :
- pour permettre au conducteur d'entraîner la colonne 1 via le tronçon proximal 1b au couple de référence, par suite de la mise en précontrainte de la zone élastique 6a axialement entre les tronçons 1a, 1b,
- pour amortir par sa mise en compression par la liaison de couplage 5 les efforts axiaux EA1 générés par une secousse transmise au tronçon distal 1a,
- pour refouler la liaison de couplage 5 en position de couplage des tronçons l'un à l'autre par suite de sa détente provoqué lors de la cessation de la secousse.

En ce qui concerne l'assemblage entre eux du tronçon distal 1a et du tronçon proximal 1b, leur immobilisation axiale pérenne l'un à l'autre permet :
- d'installer le système d'accouplement à l'extrémité proximale de la colonne 1 en étant porteur de l'organe de commande de direction, et cela sans affecter le confort de conduite du conducteur qui ne ressent pas - en cas de secousse - la brève mise en rotation relative entre les tronçons 1a,1b via l'organe de commande solidaire du tronçon proximal 1b, qui est de préférence monté sur la couronne 4 ;
- de limiter les organes mis en mouvement en cas d'une secousse supportée par la colonne 1, au tronçon distal 1a en rotation et à liaison de couplage 5 en rotation et en translation.

En outre, au moins un système d'accouplement peut être installé en une quelconque zone de la colonne 1 entre ses extrémités axiales, selon la place disponible dans l'environnement de la colonne 1 et/ou des éventuels aménagements spécifiques de la colonne 1, comme pour le réglage en position du volant par rapport au conducteur et/ou pour préserver le conducteur en cas d'accident.

De plus, le système d'accouplement peut être aisément calibré selon le véhicule en fonction notamment de sa masse et de sa puissance motrice - motorisée comme pour un véhicule automobile, un cycle ou une trottinette par exemple - ou fournie par la force musculaire du conducteur du véhicule lui-même comme pour un cycle, une trottinette ou un gyropode non motorisés.

La masse et le nombre de composants spécifiquement dédiés au découplage et/ou au re-couplage automatiques entre les tronçons sont limités, ce qui favorise l'adaptation du système d'accouplement à un quelconque véhicule roulant et ce qui procure une compétitivité significative du système d'accouplement au regard de son coût de production et/ou d'installation sur la colonne par rapport à son utilité et aux avantages procurés.

L'invention n'est pas limitée aux exemples décrits et/ou représentés. Il est par exemple possible de choisir, selon des caractéristiques préférées, l'organe élastique, les éléments de couplage et les portions d'hélice comme détaillé ci-dessous :
- l'organe élastique parmi les moyens élastiques comprenant au moins une bague en élastomère, un ressort de compression, au moins une rondelle élastique et/ou au moins une lame ;
- les éléments de couplage peuvent se présenter sous forme d'éléments roulants, choisis parmi au moins des billes, des rouleaux orientés axialement tels que des rouleaux à aiguille et des galets agencés en rotule, ou encore sous forme d'éléments coulissants de formes adaptées au coulissement choisis parmi au moins des galets, des taquets, des plots et des bornes ;
- les portions d'hélice peuvent se présenter sous forme de guides constitués de deux ailes orientées selon deux inclinaisons opposées en « V », ou sous forme de deux jeux de guides rectilignes orientés selon les deux inclinaisons angulaires opposées, les guides d'un jeu alternant avec les guides de l'autre jeu, les éléments mobiles circulant dans l'un ou l'autre des jeux en fonction du sens de rotation du tronçon distal.

## Revendications

1. Procédé de neutralisation d'efforts transitoires générés par une remontée d'au moins une brusque secousse dans une colonne de direction (1) d'un véhicule, lesdits efforts transitoires étant transmis depuis son extrémité distale à un organe de commande de direction de la trajectoire suivie par le véhicule qui est monté à une extrémité proximale de la colonne (1), **caractérisé en ce que** selon ce procédé il est effectué les opérations suivantes :
- monter en état de couplage coaxial sur un axe central (A1) de la colonne (1) conformément à un couple de référence, via une liaison de couplage mobile (5), au moins deux tronçons (1a, 1b) de colonne (1), un tronçon distal (1a) avec un tronçon proximal (1b) qui est solidaire en rotation de l'organe de commande, et ménager une zone élastique (6a) précontrainte axialement entre les tronçons (1a, 1b) montés à l'état de couplage conformément au couple de référence ;
- sous l'effet d'une mise en rotation du tronçon distal par un couple transitoire (C1) supérieur au couple de référence, provoquer un découplage automatique entre les tronçons distal (1a) et proximal (1b) par entraînement en rotation de la liaison de couplage (5) soumis au couple transitoire (C1) et guidage en hélice de cette liaison (5) dans le tronçon proximal (1b), et
- concomitamment, sous l'effet du découplage entre les tronçons (1a, 1b), entraîner en translation la liaison de couplage (5), par guidage axial sur le tronçon distal (1a) en combinaison avec le guidage en hélice dans le tronçon proximal (1b), vers la zone élastique (6a) pour la comprimer axialement entre les tronçons (1a, 1b), la compression étant supérieure à un seuil de compression correspondant à sa précontrainte, puis
- par suite d'une cessation de la secousse et corrélativement de l'épuisement des efforts transitoires, provoquer un re-couplage automatique entre les tronçons (1a, 1b) par détente de la zone élastique comprimée (6a), ladite zone étant replacée à son seuil de précontrainte entre les tronçons (1a, 1b) accouplés selon le couple de référence et la liaison de couplage (5) à l'état de couplage des tronçons (1a, 1b) entre eux.

2. Procédé de neutralisation selon la revendication 1, **caractérisé en ce que**, les efforts transitoires comportant une composante d'effort axial, la compression de la zone élastique (6a) amortit une poussée axiale générée par la composante d'effort axial.

3. Procédé de neutralisation selon l'une des revendications 1 ou 2, **caractérisé en ce que** la liaison de couplage (5) est angulairement et régulièrement répartie selon une pluralité d'interfaces de couplage mobiles (5a) entre les tronçons (1a, 1b) suivant une circonférence (CR1), ces interfaces mobiles (5a) étant guidées pour circuler en rotation et en translation axiale, sous l'effet d'une mise en rotation du tronçon distal (1a) par rapport au tronçon proximal (1b), selon les cinématiques inverses suivantes :
- chaque interface mobile (5a) se déplace en guidage curviligne d'au moins une portion d'hélice de plage angulaire limitée le long du tronçon proximal, chaque interface mobile (5a) se déplaçant alors également vers la zone élastique (6a) par un guidage axial individuel (7a) sur le tronçon distal (1a) jusqu'à l'application de ces interfaces (5a) contre la zone élastique (6a) qui produit un amortissement axial des efforts transitoires ; puis
- par suite de la cessation de la secousse, le re-couplage entre les tronçons (1a, 1b) est provoqué selon une cinématique inverse, par détente de la zone élastique (6a) vers son seuil de précontrainte, les interfaces mobiles étant alors repoussées par guidage sur le tronçon distal en translation axiale inverse et en guidage curviligne inverse le long du tronçon proximal jusqu'à rétablir l'état de couplage des tronçons entre eux selon le couple de référence.

4. Procédé de neutralisation selon la revendication 3, dans lequel, en cas d'un maintien des tronçons (1a, 1b) à l'état de découplage un accouplement prioritaire entre les tronçons (1a, 1b) est provoqué par mise en butée des éléments de couplage (5a) contre l'une et/ou l'autre des butées angulaires (8), à partir d'une manœuvre en rotation par un opérateur du tronçon proximal (1b) via l'organe de commande.

5. Système d'accouplement axial et en rotation entre un dit tronçon distal (1a) et un dit tronçon proximal (1b) d'une colonne (1) de direction d'un véhicule, dédié à la mise en œuvre du procédé selon l'une quelconque des revendications 3 ou 4, **caractérisé en ce que** les tronçons (1a, 1b) sont au moins en partie emboîtés coaxiaux (A1) et accouplés de montage l'un à l'intérieur de l'autre définissant une zone d'emboîtement (ZE), ladite zone élastique (6a) étant formée par un organe élastique (6) axialement interposé en précontrainte entre les tronçons (1a, 1b), et **en ce que** les tronçons (1a, 1b) sont accouplés entre eux en rotation via une pluralité d'éléments de couplage mobiles (5a) constituant ladite liaison de couplage (5), radialement et régulièrement intercalés entre les tronçons (1a, 1b) dans leur zone d'emboîtement (ZE), **en ce que** lesdits éléments de couplage (5a), liés en rotation au tronçon distal (1a), sont montés mobiles sur ce tronçon distal (1a) le long de guides axiaux (7a) répartis régulièrement en périphérie de ce même tronçon distal (1a), et sont conjointement montés mobiles sur le tronçon proximal (1b) dans des guides en circulation curviligne (7b) le long des portions d'hélice (9; 9a) s'étendant individuellement, à partir d'une position de couplage (8c) des tronçons (1a, 1b) entre eux au couple de référence, jusqu'à au moins une butée angulaire (8), et **en ce que**, en circulation curviligne, chaque élément mobile (5a) se trouve en position de découplage des tronçons (1a, 1b) en décalage angulaire et en décalage axial par rapport à sa position de couplage (8c), l'organe élastique (6) étant comprimé en position de découplage des tronçons (1a, 1b) par les éléments mobiles (5a) appliqués axialement.

6. Système d'accouplement selon la revendication 5, **caractérisé en ce que** chaque portion d'hélice (9 ; 9a) du guide curviligne (7b) du tronçon proximal (1b) a une forme de « V » formée de deux ailes de poussée inclinées vers l'axe commun (A1) des tronçons (1a, 1b), ces ailes s'étendant symétriquement de part et d'autre de la position de couplage (8c) entre tronçons (1a, 1b) affectée à chaque portion (9, 9a), et **en ce que** lesdites ailes ont chacune une butée angulaire (8) pour extrémité, la position de couplage (8c) étant la position de chaque guide (7b) la plus éloignée de la zone élastique (6a) et les positions des butées (8) étant les plus proches et chaque élément mobile (5a) étant monté de circulation entre la position de couplage (8c) et l'une ou l'autre des butées angulaires (8) du tronçon distal (1a) selon le sens de rotation de ce tronçon (1a).

7. Système d'accouplement selon l'une quelconque des revendications 5 ou 6, dans lequel les guides curvilignes (7b) du tronçon proximal (1b) et les guides axiaux (7a) du tronçon distal (1a) sont formés de cavités allongées creusées en surface et sont munies de parois latérales (11c ; 11d), les guides curvilignes (7b) ayant au moins une paroi latérale (11c) formant une butée longitudinale qui exerce une prise d'appui axiale sur les éléments mobiles (5a) en direction de la zone élastique (6a).

8. Système d'accouplement selon la revendication 7 dans lequel, dans la zone d'emboîtement (ZE), le tronçon distal (1a) est muni à son extrémité proximale d'un fût d'emboîtement axial (3) s'étendant à l'intérieur d'une couronne (4) que comporte le tronçon proximal (1b), les guides curvilignes (7b) étant ménagés sur une face interne (4i) de la couronne (4) et les guides axiaux (7b) sur une face externe (3e) du fût (3) en vis-à-vis de ladite face interne (4i).

9. Système d'accouplement selon la revendication 8, dans lequel les tronçons (1a, 1b) sont immobilisés axialement l'un à l'autre en une position de montage pérenne prédéfinie.

10. Système d'accouplement selon l'une quelconque des revendications 7 à 9, **caractérisé en ce qu'**il comporte une chaîne d'appuis axiaux formée des composants qui suivent liés de la façon indiquée :
- l'organe élastique (6) est axialement interposé entre un premier butoir (11a) solidaire du tronçon distal (1a) et un deuxième butoir (11b) monté autour du tronçon distal (1a) ;
- le premier butoir (11a) étant formé par une face proximale (10c) d'un écrou distal (10a) et le deuxième butoir (11b) prend appui contre les éléments de couplage (5a) qui prennent eux-mêmes appui contre la paroi de butée longitudinale (11c) du guide curviligne (7b) qui leur est affectée ;
- le tronçon distal (1a) et le tronçon proximal (1b) sont immobilisés axialement l'un à l'autre entre des écrous (10a, 10b) qui sont montés par vissage autour du tronçon distal (1a), dont l'écrou distal (10a) et un écrou proximal (10b) placés axialement de part et d'autre du tronçon proximal (1b) ; et
- l'organe élastique (6) est précontraint entre l'écrou distal (10a) et le tronçon proximal (1b).

11. Système d'accouplement selon la revendication 10, **caractérisé en ce que** le deuxième butoir (11b) est formé par une face distale de la couronne (4) du tronçon proximal (1b), et **en ce que** les portions d'hélice de circulation (9, 9a) des éléments de couplage (5a) dans le tronçon proximal sont formées de glissières présentant deux parois latérales parallèles (11c, 11d) dont une paroi distale (11d) qui prend appui contre les éléments de couplage (5a) et la paroi proximale de butée longitudinale (11c) ménagée par une face distale d'un deuxième épaulement (12b) de la couronne (4), les éléments de couplage (5a) étant directement en contact avec l'organe élastique (6).

12. Système d'accouplement selon la revendication 10, **caractérisé en ce que** le deuxième butoir (11b) est formé par une face distale d'un troisième épaulement (12c) que comporte un manchon (13) monté axialement coulissant autour du tronçon distal (1a), chaque portion d'hélice comportant une rampe (9) ne présentant que la paroi proximale de butée longitudinale (11c), et le manchon (13) qui sert de deuxième butoir (11b) ayant une avancée qui s'étend axialement pour prendre appui contre les éléments de couplage (5a).

13. Système d'accouplement selon l'une quelconque des revendications 10 à 12, **caractérisé en ce qu'**il comporte un organe de roulement (14) radialement interposé entre le tronçon distal (1a) et le tronçon proximal (1b) à leur extrémité proximale, et **en ce que** cet organe de roulement (14) comporte une bague intérieure (14b), axialement bloquée entre l'écrou proximal (10b) et un premier épaulement (12a) du tronçon distal (1a), et une bague extérieure (14a) axialement bloquée entre un deuxième épaulement intérieur (12b) formé sur le tronçon proximal (1b) et un flasque (15) fixé axialement au tronçon proximal (1b) à son extrémité proximale.

14. Système d'accouplement selon l'une quelconque des revendications 5 à 13, dans lequel l'organe élastique (6) est choisi parmi une bague en élastomère, un ressort de compression, au moins une rondelle élastique et au moins une lame.

15. Système d'accouplement selon l'une quelconque des revendications 5 à 14, dans lequel les éléments de couplage (5a) se présentent sous forme d'éléments roulants, choisis parmi au moins des billes, des rouleaux orientés axialement tels que des rouleaux à aiguille et des galets agencés en rotule, ou sous forme d'éléments coulissants de formes adaptées au coulissement choisis parmi au moins des galets, des taquets, des plots et des bornes.

16. Système d'accouplement selon l'une quelconque des revendications 5 à 15, dans lequel les portions d'hélice (9, 9a) se présentent sous forme de guides constitués de deux ailes orientées selon deux inclinaisons opposées en « V », ou sous forme de deux jeux de guides rectilignes orientés selon les deux inclinaisons angulaires opposées, les guides d'un jeu alternant avec les guides de l'autre jeu et les éléments mobiles circulant dans l'un ou l'autre des jeux en fonction du sens de rotation du tronçon distal.

17. Colonne (1) de direction d'un véhicule comportant au moins un jeu de tronçons (1a, 1b), dont un tronçon distal (1a) et un tronçon proximal (1b), accouplés entre eux en rotation et axialement, **caractérisée en ce que** lesdits tronçons (1a, 1b) sont accouplés entre eux via un système d'accouplement selon l'une quelconque des revendications 5 à 16.

18. Colonne (1) de direction d'un véhicule selon la revendication 17, **caractérisée en ce que** le système d'accouplement est installé sur la colonne (1) à son extrémité proximale, le tronçon proximal (1b) étant agencé en support (2) dudit organe de commande de la trajectoire suivie par le véhicule.

19. Véhicule roulant équipé d'une colonne de direction du véhicule reliée à son extrémité distale à au moins une roue du véhicule et munie à son extrémité proximale d'un organe de commande de la trajectoire suivie par le véhicule, **caractérisé en ce que** la colonne (1) de direction est conforme à l'une quelconque des revendications 17 ou 18.

## Patentansprüche

1. Verfahren zur Neutralisierung von vorübergehenden Kräften, die durch ein Aufsteigen von mindestens einer plötzlichen Ruckbewegung in einer Lenksäule (1) eines Fahrzeugs erzeugt werden, wobei die vorübergehenden Kräfte von ihrem distalen Ende aus auf ein Organ zur Steuerung der Richtung der von dem Fahrzeug eingeschlagenen Strecke übertragen werden, das an einem proximalen Ende der Säule (1) angebracht ist, **dadurch gekennzeichnet, dass** entsprechend diesem Verfahren die folgenden Vorgänge durchgeführt werden:
- Anbringen in einem koaxialen Kopplungszustand auf einer Mittelachse (A1) der Säule (1) gemäß einem Bezugsdrehmoment über eine bewegliche Kopplungsverbindung (5) von mindestens zwei Abschnitten (1a, 1b) der Säule (1), von einem distalen Abschnitt (1a) mit einem proximalen Abschnitt (1b), der drehfest mit dem Steuerorgan verbunden ist, und Ausbilden eines axial vorgespannten elastischen Bereichs (6a) zwischen den Abschnitten (1a, 1b), die gemäß dem Bezugsdrehmoment im gekoppelten Zustand angebracht sind;
- Hervorrufen unter der Wirkung einer Drehung des distalen Abschnitts durch ein vorübergehendes Drehmoment (C1), das größer als das Bezugsdrehmoment ist, einer automatischen Entkopplung zwischen dem distalen (1a) und dem proximalen (1b) Abschnitt durch drehende Mitnahme der dem vorübergehenden Drehmoment (C1) unterworfenen Kopplungsverbindung (5) und schraubenförmige Führung dieser Verbindung (5) in dem proximalen Abschnitt (1b), und
- gleichzeitig unter der Wirkung der Entkopplung zwischen den Abschnitten (1a, 1b) translatorisches Mitnehmen der Kopplungsverbindung (5) durch axiale Führung an dem distalen Abschnitt (1a) in Kombination mit der schraubenförmigen Führung in dem proximalen Abschnitt (1b) in Richtung des elastischen Bereichs (6a), um sie zwischen den Abschnitten (1a, 1b) axial zu komprimieren, wobei die Kompression größer als ein Kompressionsschwellenwert ist, der ihrer Vorspannung entspricht, und dann
- infolge einer Beendigung der Ruckbewegung und korrelativ mit der Erschöpfung der vorübergehenden Kräfte, Hervorrufen einer automatischen Wiederankopplung zwischen den Abschnitten (1a, 1b) durch Entspannung des komprimierten elastischen Bereichs (6a), wobei dieser Bereich wieder auf seinen Vorspannungsschwellenwert zwischen den nach dem Bezugsdrehmoment gekoppelten Abschnitten (1a, 1b) und der Kopplungsverbindung (5) im Kopplungszustand der Abschnitte (1a, 1b) untereinander gebracht wird.

2. Neutralisierungsverfahren nach Anspruch 1, **dadurch gekennzeichnet, dass**, da die vorübergehenden Kräfte eine axiale Kraftkomponente umfassen, die Kompression des elastischen Bereichs (6a) einen durch die axiale Kraftkomponente erzeugten Axialschub dämpft.

3. Neutralisierungsverfahren nach einem der Ansprüche 1 oder 2, **dadurch gekennzeichnet, dass** die Kopplungsverbindung (5) winklig und gleichmäßig über eine Vielzahl von beweglichen Kopplungsschnittstellen (5a) zwischen den Abschnitten (1a, 1b) entlang eines Umfangs (CR1) verteilt ist, wobei diese beweglichen Schnittstellen (5a) so geführt werden, dass sie sich unter der Wirkung eines Versetzens in Drehung des distalen Abschnitts (1a) in Bezug auf den proximalen Abschnitt (1b) nach den folgenden umgekehrten Kinematiken in Drehung und axialer Translation drehend bewegen:
- jede bewegliche Schnittstelle (5a) bewegt sich in bogenförmiger Führung mindestens eines schraubenförmigen Anteils mit begrenztem Winkelbereich entlang des proximalen Abschnitts fort, wobei sich jede bewegliche Schnittstelle (5a) dann auch in Richtung des elastischen Bereichs (6a) durch individuelle axiale Führung (7a) auf dem distalen Abschnitt (1a) fortbewegt, bis diese Schnittstellen (5a) an dem elastischen Bereich (6a) anliegen, was eine axiale Dämpfung der vorübergehenden Kräfte herstellt; und dann
- infolge der Beendigung der Ruckbewegung wird die erneute Kopplung zwischen den Abschnitten (1a, 1b) nach einer umgekehrten Kinematik durch Entspannung des elastischen Bereichs (6a) in Richtung seines Vorspannungsschwellenwertes hervorgerufen, wobei die beweglichen Schnittstellen dann durch Führung auf dem distalen Abschnitt in umgekehrter axialer Translation und in umgekehrter bogenförmiger Führung entlang des proximalen Abschnitts zurückgeschoben werden, bis der Kopplungszustand der Abschnitte zueinander nach dem Bezugsdrehmoment wiederhergestellt ist.

4. Neutralisierungsverfahren nach Anspruch 3, bei dem im Falle einer Beibehaltung der Abschnitte (1a, 1b) im entkoppelten Zustand eine vorrangige Kopplung zwischen den Abschnitten (1a, 1b) durch Anschlagstellung der Kopplungselemente (5a) an den einen und/oder den anderen der Winkelanschläge (8) hervorgerufen wird, ausgehend von einer Drehbetätigung des proximalen Abschnitts (1b) durch einen Bediener über das Steuerorgan.

5. System zur axialen und drehenden Kopplung zwischen einem distalen Abschnitt (1a) und einem proximalen Abschnitt (1b) einer Lenksäule (1) eines Fahrzeugs, das der Ausführung des Verfahrens nach einem der Ansprüche 3 oder 4 gewidmet ist, **dadurch gekennzeichnet, dass** die Abschnitte (1a, 1b) mindestens teilweise koaxial in Eingriff zueinander (A1) und in der Anbringung des einen im Inneren des anderen gekoppelt sind, wobei sie einen Eingriffsbereich (ZE) definieren, wobei der elastische Bereich (6a) durch ein elastisches Organ (6) gebildet wird, das axial unter Vorspannung zwischen den Abschnitten (1a, 1b) eingeschoben ist, und dass die Abschnitte (1a, 1b) über eine Vielzahl von beweglichen Kopplungselementen (5a), die die Kopplungsverbindung (5) ausbilden, radial und regelmäßig zwischen den Abschnitten (1a, 1b) in ihrem Eingriffsbereich (ZE) eingefügt sind, miteinander drehbar gekoppelt sind, dass die Kopplungselemente (5a), die drehend mit dem distalen Abschnitt (1a) verbunden sind, an diesem distalen Abschnitt (1a) entlang axialer Führungen (7a), die gleichmäßig über den Umfang dieses distalen Abschnitts (1a) verteilt sind, beweglich angebracht und gemeinsam an dem proximalen Abschnitt (1b) in bogenförmig umlaufenden Führungen (7b) entlang der schraubenförmigen Anteile (9; 9a) beweglich angebracht sich einzeln erstrecken, von einer Kopplungsposition (8c) der Abschnitte (1a, 1b) miteinander bei dem Bezugsdrehmoment bis zu mindestens einem Winkelanschlag (8), und dass sich in dem bogenförmigen Umlauf jedes bewegliche Element (5a) in der Entkopplungsposition der Abschnitte (1a, 1b) in Winkelversatz und in axialem Versatz zu seiner Kopplungsposition (8c) befindet, wobei das elastische Element (6) in der Entkopplungsposition der Abschnitte (1a, 1b) durch die axial anliegenden beweglichen Elemente (5a) komprimiert wird.

6. Kopplungssystem nach Anspruch 5, **dadurch gekennzeichnet, dass** jeder schraubenförmige Anteil (9; 9a) der bogenförmigen Führung (7b) des proximalen Abschnitts (1b) eine "V"-Form aufweist, die aus zwei zur gemeinsamen Achse (A1) der Abschnitte (1a, 1b) geneigten Schubflügeln gebildet ist, wobei sich diese Flügel symmetrisch zu beiden Seiten der jedem Anteil (9, 9a) zugeordneten Kopplungsposition (8c) zwischen den Abschnitten (1a, 1b) erstrecken, und dass die Flügel jeweils einen Winkelanschlag (8) als Ende aufweisen, wobei die Kopplungsposition (8c) die Position jeder Führung (7b) ist, die am weitesten von dem elastischen Bereich (6a) entfernt ist, und die Positionen der Anschläge (8) die nächstgelegenen sind und jedes bewegliche Element (5a) so angebracht ist, dass es zwischen der Kopplungsposition (8c) und dem einen der Winkelanschläge (8) des distalen Abschnitts (1a) nach der Drehrichtung dieses Abschnitts (1a) umläuft.

7. Kopplungssystem nach einem der Ansprüche 5 oder 6, bei dem die bogenförmigen Führungen (7b) des proximalen Abschnitts (1b) und die axialen Führungen (7a) des distalen Abschnitts (1a) aus länglichen, in die Oberfläche eingearbeiteten Hohlräumen bestehen und mit Seitenwänden (11c; 11d) versehen sind, wobei die bogenförmigen Führungen (7b) mindestens eine Seitenwand (11c) aufweisen, die einen Längsanschlag bildet, der einen axialen Abstützgriff auf die beweglichen Elemente (5a) in Richtung des elastischen Bereichs (6a) ausübt.

8. Kopplungssystem nach Anspruch 7, bei dem in dem Eingriffsbereich (ZE) der distale Abschnitt (1a) an seinem proximalen Ende mit einem axialen Eingriffsschaft (3) versehen ist, der sich im Inneren eines Kranzes (4) erstreckt, den der proximale Abschnitt (1b) umfasst, wobei die bogenförmigen Führungen (7b) auf einer Innenfläche (4i) des Kranzes (4) und die axialen Führungen (7b) auf einer Außenfläche (3e) des Schafts (3) gegenüber der Innenfläche (4i) eingerichtet sind.

9. Kopplungssystem nach Anspruch 8, bei dem die Abschnitte (1a, 1b) in einer vorbestimmten, dauerhaften Montageposition axial aneinander fixiert sind.

10. Kopplungssystem nach einem der Ansprüche 7 bis 9, **dadurch gekennzeichnet, dass** es eine Kette aus axialen Abstützungen umfasst, die aus den folgenden Komponenten gebildet ist, die verbunden sind, wie angegeben:
- das elastische Organ (6) ist axial zwischen einem ersten Anschlag (11a), der fest mit dem distalen Abschnitt (1a) verbunden ist, und einem zweiten Anschlag (11b), der um den distalen Abschnitt (1a) herum angebracht ist, eingefügt;
- wobei der erste Anschlag (11a) durch eine proximale Fläche (10c) einer distalen Mutter (10a) gebildet wird und der zweite Anschlag (11b) sich gegen die Kopplungselemente (5a) abstützt, die sich ihrerseits gegen die Längsanschlagwand (11c) der ihnen zugeordneten bogenförmigen Führung (7b) abstützen;
- der distale Abschnitt (1a) und der proximale Abschnitt (1b) sind axial zueinander zwischen Muttern (10a, 10b) fixiert, die durch Verschrauben um den distalen Abschnitt (1a) herum angebracht sind, wobei sich die distale Mutter (10a) und eine proximale Mutter (10b) axial beiderseits des proximalen Abschnitts (1b) befinden; und
- das elastische Organ (6) ist zwischen der distalen Mutter (10a) und dem proximalen Abschnitt (1b) vorgespannt.

11. Kopplungssystem nach Anspruch 10, **dadurch gekennzeichnet, dass** der zweite Anschlag (11b) durch eine distale Fläche des Kranzes (4) des proximalen Abschnitts (1b) gebildet wird, und dass die umlaufenden schraubenförmigen Anteile (9, 9a) der Kopplungselemente (5a) in dem proximalen Abschnitt aus Gleitschienen gebildet sind, die zwei parallele Seitenwände (11c, 11d) enthalten, von denen eine distale Wand (11d) sich an den Kopplungselementen (5a) abstützt und die proximale Wand als Längsanschlag (11c) durch eine distale Fläche einer zweiten Schulter (12b) des Kranzes (4) eingerichtet ist, wobei die Kopplungselemente (5a) direkt mit dem elastischen Organ (6) in Kontakt stehen.

12. Kopplungssystem nach Anspruch 10, **dadurch gekennzeichnet, dass** der zweite Anschlag (11b) durch eine distale Fläche einer dritten Schulter (12c) gebildet wird, die eine axial verschiebbar um den distalen Abschnitt (1a) angebrachte Hülse (13) umfasst, wobei jeder schraubenförmige Anteil eine Rampe (9) umfasst, die nur die proximale Längsanschlagwand (11c) enthält, und die Hülse (13), die als zweiter Anschlag (11b) dient, einen Vorsprung aufweist, der sich axial erstreckt, um sich gegen die Kopplungselemente (5a) abzustützen.

13. Kopplungssystem nach einem der Ansprüche 10 bis 12, **dadurch gekennzeichnet, dass** es ein radial zwischen dem distalen Abschnitt (1a) und dem proximalen Abschnitt (1b) an ihrem proximalen Ende eingefügtes Wälzorgan (14) umfasst, und dass dieses Wälzorgan (14) einen Innenring (14b) umfasst, der axial zwischen der proximalen Mutter (10b) und einer ersten Schulter (12a) des distalen Abschnitts (1a) blockiert ist, und einen Außenring (14a), der axial zwischen einer zweiten inneren Schulter (12b), die an dem proximalen Abschnitt (1b) gebildet ist, und einem Flansch (15), der axial an dem proximalen Abschnitt (1b) an seinem proximalen Ende befestigt ist, blockiert ist.

14. Kopplungssystem nach einem der Ansprüche 5 bis 13, bei dem das elastische Organ (6) aus einem Elastomerring, einer Kompressionsfeder, mindestens einer elastischen Unterlegscheibe und mindestens einem Kontaktstück ausgewählt ist.

15. Kopplungssystem nach einem der Ansprüche 5 bis 14, bei dem die Kopplungselemente (5a) in Form von rollenden Elementen ausgeführt sind, die aus mindestens Kugeln, axial ausgerichteten Rollen wie Nadellagern und Laufrollen, die als Kugelgelenk angeordnet sind, ausgewählt sind, oder in Form von Gleitelementen von an das Gleiten angepassten Formen, ausgewählt aus mindestens Laufrollen, Stollen, Klötzen und Sperren.

16. Kopplungssystem nach einem der Ansprüche 5 bis 15, bei dem die schraubenförmigen Anteile (9, 9a) in Form von Führungen ausgeführt sind, die aus zwei Flügeln bestehen, die in zwei entgegengesetzten "V"-förmigen Neigungen ausgerichtet sind, oder in Form von zwei Sätzen gerader Führungen, die in zwei entgegengesetzten Winkelneigungen ausgerichtet sind, wobei die Führungen eines Satzes mit den Führungen des anderen Satzes abwechseln und die beweglichen Elemente in dem einen oder anderen Satz in Abhängigkeit von der Drehrichtung des distalen Abschnitts umlaufen.

17. Lenksäule (1) eines Fahrzeugs, die mindestens einen Satz Abschnitte (1a, 1b) umfasst, einschließlich eines distalen Abschnitts (1a) und eines proximalen Abschnitts (1b), die drehbar und axial miteinander gekoppelt sind, **dadurch gekennzeichnet, dass** die Abschnitte (1a, 1b) über ein Kopplungssystem nach einem der Ansprüche 5 bis 16 miteinander gekoppelt sind.

18. Lenksäule (1) eines Fahrzeugs nach Anspruch 17, **dadurch gekennzeichnet, dass** das Kopplungssystem an der Säule (1) an ihrem proximalen Ende installiert ist, wobei der proximale Abschnitt (1b) als Unterstützung (2) des Steuerorgans für die von dem Fahrzeug eingeschlagene Strecke angeordnet ist.

19. Rollendes Fahrzeug, das mit einer Lenksäule des Fahrzeugs ausgestattet ist, die an ihrem distalen Ende mit mindestens einem Rad des Fahrzeugs verbunden ist und an ihrem proximalen Ende mit einem Organ zur Steuerung der von dem Fahrzeug eingeschlagenen Strecke versehen ist, **dadurch gekennzeichnet, dass** die Lenksäule (1) einem der Ansprüche 17 oder 18 entspricht.

## Claims

1. A method for neutralizing transient forces generated by a rise of at least one sudden jolt in a steering column (1) of a vehicle, said transient forces being transmitted from its distal end to a steering device for controlling the trajectory followed by the vehicle which is mounted on a proximal end of the column (1) **characterized in that** according to this method, the following operations are performed:
- in a state of coaxial coupling on a central axis (A1) of the column (1), mounting, in accordance with a reference torque, via a mobile coupling link (5), at least two sections (1a, 1b) of column (1), a distal section (1a) with a proximal section (1b) which is rotationally integral with the control device, and providing a pre-stressed elastic region (6a) axially between the sections (1a, 1b) mounted in the coupling state in accordance with the reference torque,
- under the effect of a start of rotation of the distal section by a transient torque (C1) greater than the reference torque, causing an automatic decoupling between the distal (1a) and proximal (1b) sections by rotationally driving the coupling link (5) subjected to the transient torque (C1) and by helical guidance of this link (5) in the proximal section (1b), and
- simultaneously, under the effect of the decoupling between the sections (1a, 1b), driving the coupling link (5) in translation by axial guidance on the section (1a) combined with helical guidance in the distal section (1b) to the axial region (6a) so as to compress the latter axially between the sections (1a, 1b), the compression being greater than a compression threshold corresponding to its prestressing, then
- as a result of the cessation of the jolt and correlatively of the exhaustion of the transient forces, causing an automatic re-coupling between the sections (1a, 1b) by relaxing the compressed elastic region (6a), said region being returned to its pre-stressing threshold between the sections (1a, 1b) coupled under the reference torque and the coupling link (5) being returned to the state of coupling of the sections (1a,1b) with each other.

2. The method of neutralization as claimed in claim 1, **characterized in that** since the transient forces include a component of axial force, the compression of the elastic region (6a) absorbs an axial thrust generated by the component of axial force.

3. The method of neutralization as claimed in either claim 1 or 2, **characterized in that** the coupling link (5) is angularly and uniformly distributed on a plurality of interfaces of mobile coupling (5a) between the sections (1a, 1b) along a circumference (CR1), these mobile interfaces (5a) being guided to circulate rotationally and in axial translation, under the effect of a start of rotation of the distal section (1a) with respect to the proximal section (1b), under the following reverse kinematics:
- each mobile interface (5a) moves in curvilinear guidance by at least one helix portion of angular range limited along the proximal section, each mobile interface (5a) also moving to the elastic region (6a) through an individual axial guide (7a) on the distal section (1a) until these interfaces (5a) abut the elastic region (6a), which produces axial absorption of the transient forces; then
- as a result of the cessation of the jolt, the re-coupling between the sections (1a, 1b) is caused under reverse kinematics, through the elastic region (6a) relaxing to its pre-stressed threshold, the mobile interfaces then being pushed back by guidance on the distal section in reverse axial translation and reverse curvilinear guidance along the proximal section until the state of coupling of the sections with each other is re-established under the reference torque.

4. The method of neutralization as claimed in claim 3, in which, in the case where the sections (1a, 1b) are held in the decoupled state, priority coupling between the sections (1a, 1b) is brought about by placing the coupling elements (5a) in abutment against one and/or the other of the angular stops (8), starting with a rotational maneuver operated by an operator of the proximal section (1b) via the control device.

5. An axial and rotational coupling system between a so-called distal section (1a) and a so-called proximal section (1b) of a column (1) for steering a vehicle, dedicated to the implementation of the method as claimed in any one of the preceding claims, **characterized in that** the sections (1a, 1b) are at least partially coaxially interlocked (A1) and coupled by assembly one inside the other, defining an interlocking region (ZE), said elastic region (6a) being comprised of an elastic device (6) axially interlocked, prestressed, between the sections (a, 1b) and **in that** the sections (1a, 1b) are coupled together rotationally via a plurality of mobile coupling elements (5a) comprising said coupling link (5), radially and uniformly interposed between the sections (1a, 1b) in their interlocking region (ZE), and **in that** said coupling elements (5a), rotationally linked with the distal section (1a), are assembled mobile on this distal section (1a) along axial guides (7a) uniformly distributed peripherally on this same distal section (1a), and are jointly mounted mobile on the proximal section (1b) in guides (7b) in curvilinear circulation along helix portions (9; 9a) extending individually, from a position (8c) of coupling together of the sections (1a, 1b) at the reference torque, up to at least one angular stop (8) and **in that**, in curvilinear circulation, each mobile element (5a) is in a decoupled position of the sections (1a, 1b) in angular offset and in axial offset with respect to its coupling position (8c), the elastic device (6) being compressed in a decoupling position of the sections (1a, 1b) by the mobile elements(5a) axially abutting.

6. The coupling system as claimed in claim 5, **characterized in that** each helix portion (9; 9a) of the curvilinear guide (7b) of the proximal section (1b) is in the shape of a "V", comprised of two thrust wings inclined towards the common axis (A1) of the sections (1a, 1b), these wings extending symmetrically on both sides of the coupling position (8c) between sections (1a, 1b), the position assigned to each portion (9; 9a), and **in that** each of said wings has an angular stop (8) as its end, the coupling position (8c) being the position of each guide (7b) the most distant from the elastic region (6a) and the positions of the stops (8) being the closest and each mobile element (5a) being mounted to circulate between the coupling position (8c) and either one of the angular stops (8) of the distal section (1a) in the direction of rotation of this section (1a).

7. The coupling system as claimed in either claim 5 or 6, in which the curvilinear guides (7b) of the proximal section (1b) and the axial guides (7a) of the distal section (1a) are comprised of elongate cavities, hollow on the surface, and are equipped with side walls (11c; 11d), the curvilinear guides (7b) having at least one side wall (11c) forming a longitudinal stop which exerts an axial abutment contact on the mobile elements (5a) in the direction of the elastic region (6a).

8. The coupling system as claimed in claim 7, in which, in the interlocking region (ZE), the distal section (1a) is equipped at its proximal end with an axial interlocking shaft (3) extending inside a collar (4) included in the proximal section (1b), the curvilinear guides (7b) being provided on an inner face (4i) of the collar (4) and the axial guides (7b) on an outer face (3e) of the shaft (3) facing said inner face (4i).

9. The coupling system as claimed in claim 8, in which the sections (1a, 1b) are axially immobilized together according to a predefined permanent axial mounting position.

10. The coupling system as claimed in any one of claims 7 to 10, **characterized in that** it includes a chain of axial abutments comprised of the following components connected in the indicated manner:
- the elastic device (6) is axially interposed between a first stopper (11a) integral with the distal section (1a) and a second stopper (11b) mounted around the distal section (1a);
- the first stopper (11a) being comprised of a proximal face (10c) of a distal nut (10a) and the second stopper (11b) abuts the coupling elements (5a), which in turn abut the longitudinal stop wall (11c) of the curvilinear guide (7b) assigned to them;
- the distal section (1a) and the proximal section (1b) are axially immobilized in relation to each other between the nuts (10a, 10b) which are screw-mounted around the distal section (1a), whose distal nut (10a) and a proximal nut (10b) are placed on both sides of the proximal section (1b); and
- the elastic device (6) is prestressed between the distal nut (10a) and the proximal section (1b).

11. The coupling system as claimed in claim 10, **characterized in that** the second stopper (11b) is comprised of a distal face (12c) of the collar (4) of the proximal section (1b) and **in that** the helix portions (7b) for circulating the coupling elements (5a) in the proximal section are comprised of sliders having two parallel side walls (11cm, 11d), including a distal wall (11d) which abuts the coupling elements (5a) and the longitudinal stop proximal wall (11c) provided by a distal face of a second shoulder (12b) of the collar (4), the coupling elements (5a) being in direct contact with the elastic device (6).

12. The coupling system as claimed in claim 10, **characterized in that** the second stopper (11b) is comprised of a distal face of a third shoulder (12c) which includes a sleeve (13) mounted to slide axially around the distal section (1a), each helix portion including a ramp (9) having only the longitudinal stop proximal wall (11c) and the sleeve (13) which acts as second stopper (11b) having a step which extends axially to abut the coupling elements (5a).

13. The coupling system as claimed in any one of claims 5 to 12, **characterized in that** it includes a running gear (14) radially interposed between the distal section (1a) and the proximal section (1b) at their proximal end, and **in that** this running gear (14) includes an inner ring (14b), axially blocked between the proximal nut (10b) and a first shoulder (12a) of the distal section (1a), and an outer ring (14a), axially blocked between a second inner shoulder (12b) formed on the proximal section (1b) and a flange (15) axially fastened to the proximal section (1b) at its proximal end.

14. The coupling system as claimed in any one of claims 5 to 13, in which the elastic device (6) is chosen among an elastomer ring, a compression spring, at least one spring washer and at least one blade.

15. The coupling system as claimed in any one of claims 5 to 14, in which the coupling elements (5a) are presented in the form of roller elements, chosen among at least balls, rollers oriented axially such as needle rollers and rollers arranged as balls, or as sliding elements in shapes suitable for sliding chosen among at least rollers, cleats, pins and posts.

16. The coupling system as claimed in any one of claims 5 to 15, in which the helix portions (7b) are presented in the form of guides consisting of two wings oriented according to two opposing inclines in a "V" shape, or in the form of two sets of rectilinear guides oriented according to the two opposed angular inclines, the guides of one set alternating with the guides of the other set, and the mobile elements circulating in either one of the sets depending on the direction of rotation of the distal section.

17. A column (1) for steering a vehicle including at least one set of sections (1a, 1b), including a distal section (1a) and a proximal section (1b), rotationally and axially coupled together, **characterized in that** said sections (1a, 1b) are coupled together via a coupling system as claimed in any one of claims 5 to 16.

18. The column (1) for steering a vehicle as claimed in claim 17, **characterized in that** the coupling system is installed on the column (1) at its proximal end, the proximal section (1b) being arranged as a mounting (2) for said device for controlling the trajectory followed by the vehicle.

19. A traveling vehicle equipped with a column for steering the vehicle connected at its distal end to at least one wheel of the vehicle and provided at its proximal end with a device for controlling the trajectory followed by the vehicle, **characterized in that** the steering column (1) conforms to either one of the claims 17 or 18.
